# EUROPÄISCHE PATENTSCHRIFT

(11) **EP 3 044 132 B1**
(45) Veröffentlichungstag und Bekanntmachung des Hinweises auf die Patenterteilung: **07.06.2017**
(21) Anmeldenummer: 14752899.6
(22) Anmeldetag: 20.08.2014
(51) Int. Cl.: B65G 35/06

(54) **TRANSPORTSYSTEM**
CONVEYING SYSTEM
SYSTÈME DE TRANSPORT

(30) Priorität: 12.09.2013 DE 102013110081
(43) Veröffentlichungstag der Anmeldung: 20.07.2016
(73) Patentinhaber: KHS GmbH, 44143 Dortmund (DE)
(72) Erfinder: KAMPS, Sebastian, Verstorben (DE); NITSCH, Thomas, 47533 Kleve (DE); VAN HEUKELUM, Stefan, 47559 Kranenburg (DE)
(86) Internationale Anmeldenummer: PCT/EP2014/067785
(87) Internationale Veröffentlichungsnummer: WO 2015/036216

(56) Entgegenhaltungen:
- EP-A1- 0 089 543
- EP-A1- 0 366 225
- EP-A1- 2 186 759
- EP-A1- 2 522 605
- WO-A1-2011/001356
- WO-A1-2012/134548
- US-A1- 2003 173 186
- US-A1- 2004 168 883

## Beschreibung

Die Erfindung bezieht sich auf ein Transportsystem gemäß Oberbegriff Patentanspruch 1. Transportsysteme mit auf einer in sich geschlossenen Transportstrecke bewegten Schlitten sind für zahlreiche Anwendungen geeignet, insbesondere auch im Bereich der Lebensmittel- und/oder Getränkeindustrie, insbesondere bei Vorrichtungen oder Anlagen zum Transportieren und/oder Behandeln von Behältern.

Bei derartigen Transportsystemen ist es vielfach erforderlich, die Schlitten z.B. im Bereich von Umlenkungen der Transportstrecke mit Hilfe von Transporträdern weiterzubewegen, die in einer Transportraddrehrichtung umlaufend angetrieben sind und an ihrem Umfang eine Vielzahl von umfangsseitig offenen Mitnahmebereichen bilden, in die Mitnehmer an den Schlitten eingreifen, sodass letztere mit dem umlaufenden Transportrad mitgeführt oder weitergezogen oder geschoben werden. Insbesondere dann, wenn einem solchen Transportrad in einer Transportrichtung ein Transportstreckenabschnitt vorausgeht, an dem das Weiterbewegen der Schlitten mit einem dortigen Vorschub- oder Fördersystem, beispielsweise mit einer Schubkette erfolgt und somit bezüglich der Förderung der Schlitten eine Übergabe von dem Transportstreckenabschnitt an das Transportrad erfolgen muss, ist diese Übergabe vielfach problematisch, insbesondere dann, wenn im Laufe des Betriebes des Transportsystems verschleiß- und/oder belastungsbedingte Längenänderungen im Vorschubsystem bzw. in der Schubkette aufgetreten sind. Solch ein Fördersystem nach dem Oberbegriff des Anspruchs 1 ist aus der EP 0 089 543 A1 bekannt. Aufgabe der Erfindung ist es ein Transportsystem mit einem Transportrad aufzuzeigen, welches die vorgenannten Nachteile vermeidet und eine störungsfreie Übergabe der Schlitten an das Transportrad ermöglicht. Zur Lösung dieser Aufgabe ist ein Transportsystem entsprechend dem Patentanspruch 1 ausgebildet.

Eine Besonderheit des Transportrades des erfindungsgemässen Transportsystems besteht darin, dass die Mitnahmebereichen beispielsweise fingerartig ausgebildeten Führungs- und Mitnehmerelemente aufweisen, die die Weiterbewegung der Schlitten mit dem Transportrad bewirken und gegen hierfür die die Mitnehmer der Schlitten anliegen, und dass die Führungs- und Mitnehmerelemente jeweils individuell gesteuert relativ zum Transportrad in Transportraddrehrichtung und entgegen dieser Drehrichtung bewegbar sind. Hierdurch ist es beispielsweise bei einem Transportsystem, bei dem die Schlittenbewegung auf einem dem Transportrad in Transportrichtung vorausgehenden Transportstreckenabschnitt mit einem Vorschubsystem, beispielsweise mit einer Schlitten- oder Schubkette erzeugt wird, jeden Schlitten nach dem Einlaufen seines Mitnehmers in einen der Mitnahmebereiche des Transportrades durch gesteuertes Bewegen des betreffenden Führungs- und Mitnahmeelementes so zu beschleunigen, dass er von dem Vorschubsystem bzw. der Schlitten- oder Schubkette zuverlässig freikommt, und zwar selbst dann, wenn am Vorschubsystem eine verschleiß- und/oder belastungsbedingte Längenänderung eingetreten ist. Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung und in Draufsicht ein Transportsystem gemäß der Erfindung mit mehreren auf einer geschlossenen Bewegungsbahn bewegten Schlitten;
- Fig. 2: einen der Schlitten zusammen mit einem Umlenkrad des Transportsystems der Figur 1;
- Fig. 3 - 5: eines der Transporträder des Transportsystems der Figur 1 in perspektivischer Ansicht, in Draufsicht sowie in Seitenansicht;
- Fig. 6: in Teildarstellung mehrere Führungs- und Mitnahmeelemente des Transportrades der Figuren 3 - 5;
- Fig. 7: eine Führungskurve zum gesteuerten Schwenken der Führungs- und Mitnahmeelemente;
- Fig. 8: in einer Darstellung wie Figur 1 ein Transportsystem gemäß der Erfindung mit einer weiteren Transportstrecke mit auf dieser bewegten Schlitten;
- Fig. 9 und 10: Darstellungen entsprechend den Figuren 6 und 7 der Transporträder der weiteren Transportstrecke.

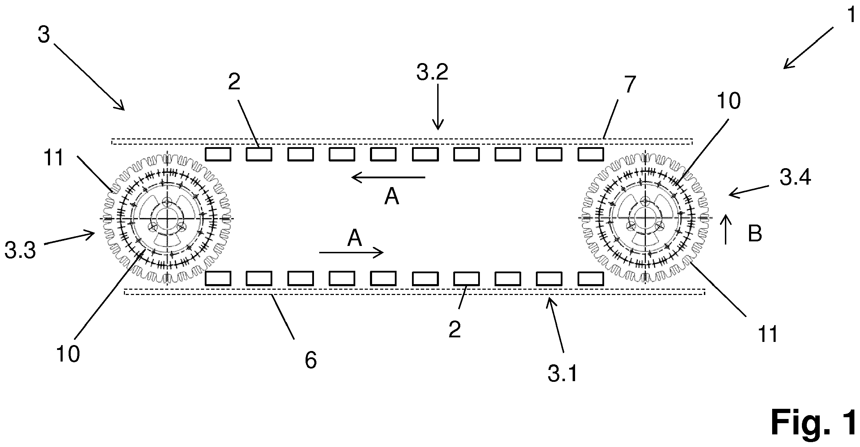

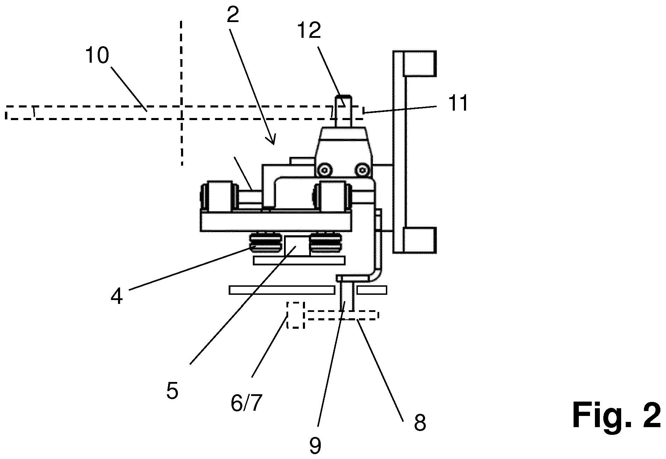

Das in den Figuren 1 und 2 allgemein mit 1 bezeichnete Transportsystem umfasst eine Vielzahl von Schlitten 2, die auf einer in sich geschlossenen Transportstrecke 3 in einer Transportrichtung A bewegt werden. Die Transportstrecke 3 umfasst zwei geradlinig verlaufende Transportstreckenabschnitte 3.1 und 3.2 sowie an den Enden dieser Abschnitte jeweils einen eine Umlenkung bildenden Transportstreckenabschnitt 3.3 und 3.4. Die von den Transportstreckenabschnitten 3.1 - 3.4 gebildete Transportstrecke ist bei der dargestellten Ausführungsform in einer horizontalen oder im Wesentlichen horizontalen Ebene angeordnet. Die in Transportrichtung A jeweils voneinander beabstandeten Schlitten 2 sind entlang der gesamten Transportstrecke 3 mit Führungsrollen 4 an einer dem Verlauf der in sich geschlossenen Transportstrecke 3 entsprechenden Führung 5 geführt. An den geradlinig verlaufenden Transportstreckenabschnitten 3.1 und 3.2 erfolgt die Bewegung der Schlitten 2 durch jeweils eine Schlitten- oder Schubkette 6 bzw. 7, von denen jede endlos umlaufend eine geschlossene Schlaufe bildet, deren Schlaufenebene senkrecht oder im Wesentlichen senkrecht zur Ebene der Transportstrecke 3 angeordnet ist. Die Schubketten 6 und 7 sind mit Schubgliedern 8 versehen, die zum Weiterbewegen der Schlitten 2 durch Weiterschieben mit jeweils einem an jedem Schlitten 2 vorgesehenen Mitnehmer 9 zusammenwirken. An den als Umlenkung ausgebildeten Transportstreckenabschnitten 3.3 und 3.4 erfolgt der Transport der Schlitten 2 nicht mehr durch die Schubketten 6 und 7, sondern durch ein Transportrad 10, welches synchron mit den beiden Schubketten 6 und 7 um eine Transportradachse TA senkrecht zur Ebene der Transportstrecke 3, d.h. bei der dargestellten Ausführungsform um eine vertikale oder im Wesentlichen vertikale Transportradachse TA umlaufend angetrieben ist.

Die beiden, bei der dargestellten Ausführungsform identisch ausgebildeten Transporträder 10 bilden an ihrem Umfang eine Vielzahl von Mitnahmebereichen 11 für Mitnehmer 12, beispielsweise in Form von Stiften an den Schlitten 2.

Die transportmäßige Übergabe jedes Schlittens 2 von dem Transportstreckenabschnitt 3.1 an den Transportstreckenabschnitt 3.4 bzw. von dem Transportstreckenabschnitt 3.2 an den Transportstreckenabschnitt 3.3 erfolgt derart, dass dann, wenn der Mitnehmer 12 eines Schlittens 2 in einem Mitnahmebereich 11 vollständig eingelaufen ist, die jeweilige Schubkette 6 bzw. 7 derart abtaucht, dass der betreffende Schlitten 2 bzw. dessen Mitnehmer 9 von dem Schubglied 8 der Schubkette 6 bzw. 7 freikommt. Um dies sowie die Übergabe des jeweiligen Schlittens 2 an das Transportrad 10 zu unterstützen, sind die Mitnahmebereiche 11 in der nachstehend noch näher beschriebenen Weise derart ausgeführt und gesteuert, dass unmittelbar nach dem vollständigen Einlauf eines Mitnehmers 12 in einen Mitnahmebereich 11 über diesen und über den schlittenseitigen Mitnehmer 12 eine Beschleunigung des betreffenden Schlittens 2 erfolgt.

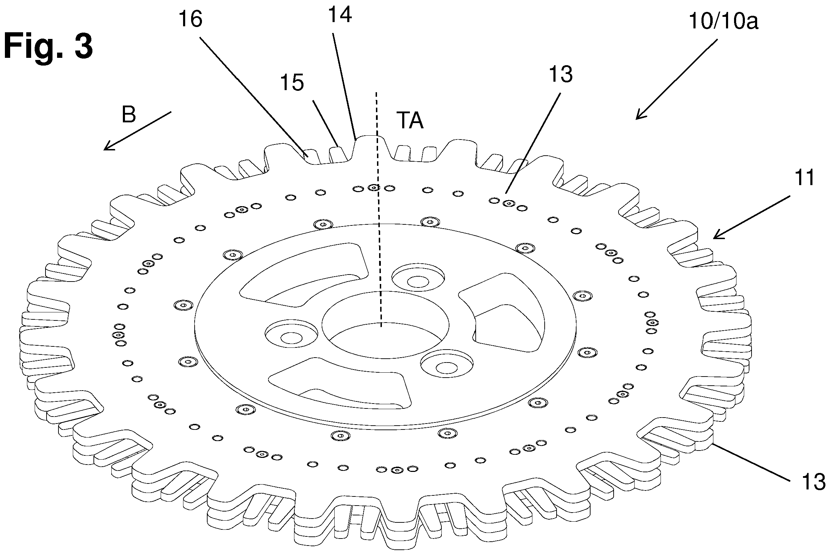

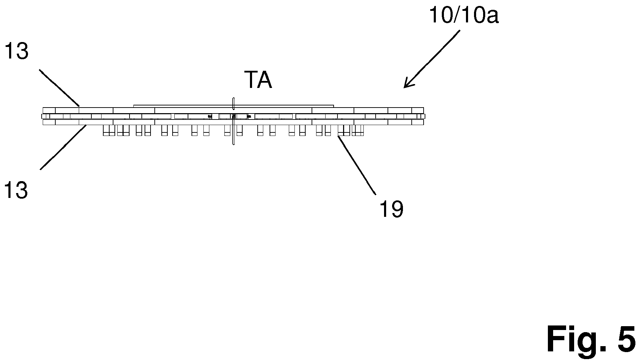

Wie die Figuren 3 - 6 zeigen, umfasst jedes Transportrad 10 zwei identische und achsgleich mit der Achse TA angeordnete Sternrädern 13 mit umfangsseitig offenen Ausnehmungen 14. Zwischen den beiden Sternrädern 13 ist eine Vielzahl von Führungs- und Mitnahmeelementen 15 und 16 angeordnet, die jeweils um eine Achse 15.1 bzw. 16.1 parallel zur Transportradachse TA schwenkbar an den Sternrädern gelagert sind. Jeder Ausnehmung 14 ist jeweils ein Führungs- und Mitnahmeelement 15 sowie ein Führungs- und Mitnahmeelement 16 zugeordnet ist, und zwar derart, dass bezogen auf die Drehrichtung B des Transportrades 10 das Führungs- und Mitnahmeelement 15 dem Führungs- und Mitnahmeelement 16 nacheilt.

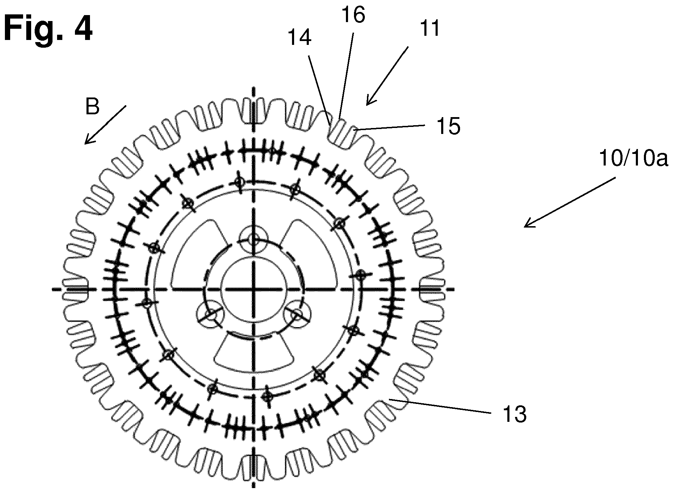

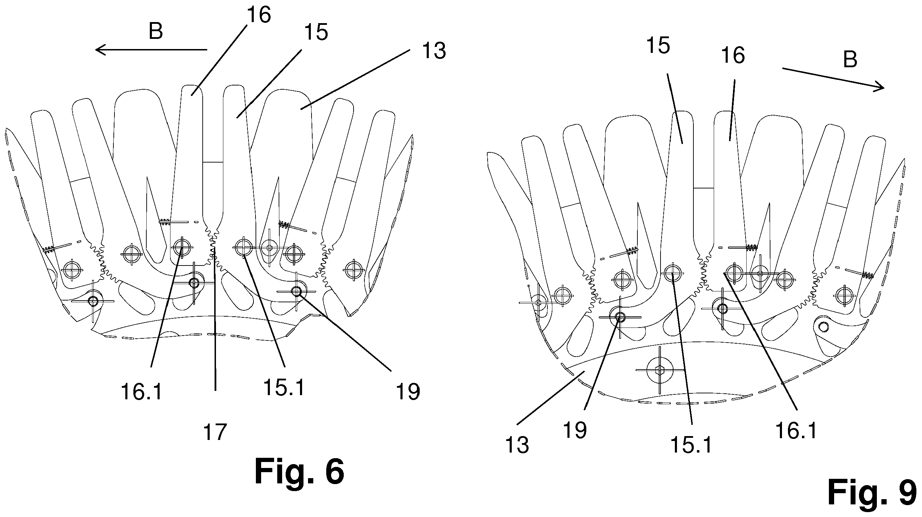

Die bei der Darstellung der Figuren 4 und 6 in die jeweilige Ausnehmung 14 hineinreichenden fingerartigen Führungs- und Mitnehmerelemente 15 und 16 sind für jeden Mitnahmebereich 11 individuell zwischen einem ersten Zustand, in dem ihre einander zugewandten Seiten, die Mitnahme- und Führungsflächen für die Mitnehmer 12 bilden, im Bereich der Seitenflächen der Ausnehmungen 14 befinden und einen größeren Abstand voneinander aufweisen, und einem Zustand gegenläufig schwenkbar, in welchem die Führungs- und Mitnahmeelemente 15 in die jeweilige Ausnehmung 14 seitlich hineingeschwenkt sind und ihre einander zugewandten Flächen einen Abstand voneinander aufweisen, der gleich oder nur geringfügig größer ist als der Querschnitt der Mitnehmer 12. Die Führungs- und Mitnahmeelemente 15 und 16 bilden somit zwischen sich eine bezogen auf die Transportradachse TA radial offene Anlage und Führung. Durch das Schwenken der Führungs- und Mitnahmeelemente 15 und 16 aus dem ersten Zustand in den zweiten Zustand erfolgt über das jeweilige Führungs- und Mitnahmeelement 15 und den Mitnehmer 12 die Beschleunigung des betreffenden Schlitten 2 bei der Übergabe an das Transportrad 10.

Mehr im Detail sind die einander zugeordneten Führungs- und Mitnahmeelemente 15 und 16 antriebsmäßig über eine Verzahnung 17 miteinander verbunden, sodass das Schwenken des Führungs- und Mitnahmeelementes 15 ein gegenläufiges Schwenken des zugehörigen Führungs- und Mitnahmeelementes 16 bewirkt. Das individuell gesteuerte Schwenken der Führungs- und Mitnahmeelemente 15 und 16 jedes Mitnahmebereichs 11 erfolgt bei der dargestellten Ausführungsform kurvengesteuert durch einen in eine Steuerkurve 18 eingreifenden Bolzen 19 an einem Ende der Führungs- und Mitnahmeelement 15. Die Steuerkurve 18 ist an einem mit dem Transportrad 10 nicht umlaufenden Maschinengestell vorgesehen und weist idealerweise mindestens ein Verstellelement 20 auf (hier zwei), mittels welchem der Steuerpunkt/-abschnitt in seiner Winkelposition 21.1, 21.2 verstellt werden kann. Somit können z.B. Längenänderungen der Schlitten- oder Schubketten 6 aufgrund von Verschleiß oder thermischen Einflüssen leicht kompensiert bzw. nachjustiert werden.

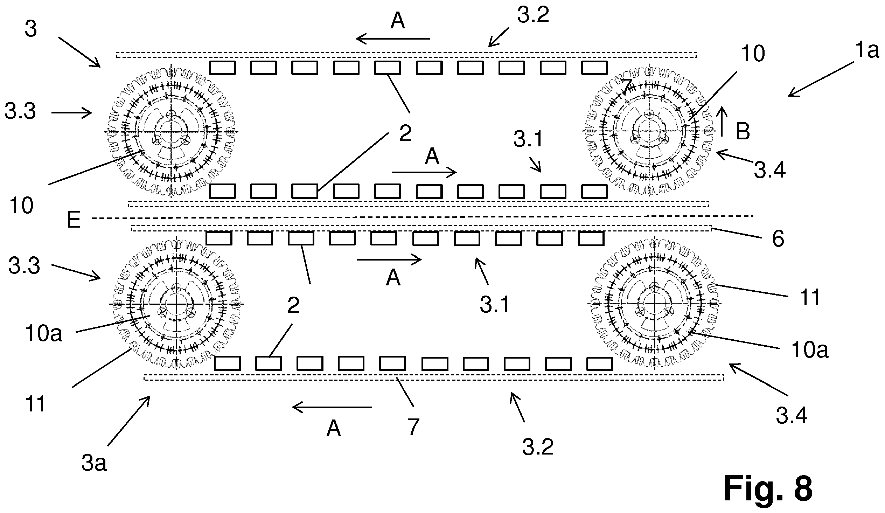

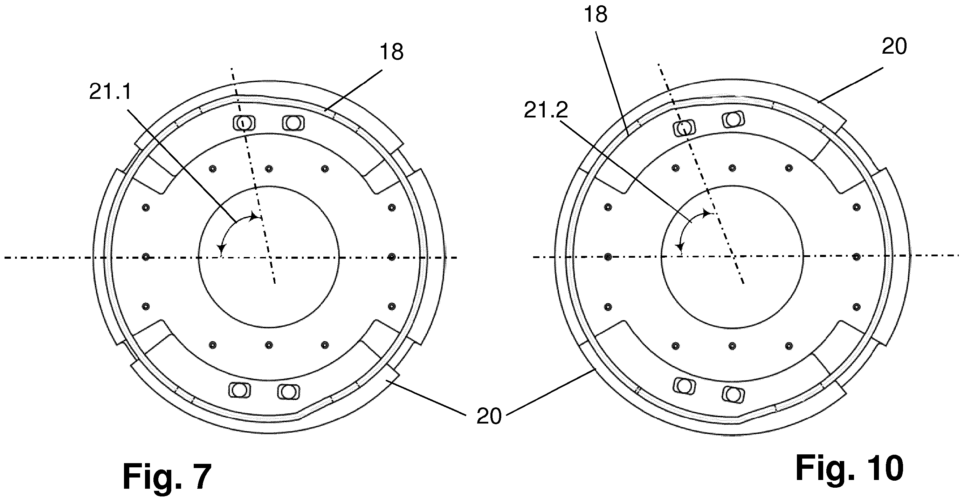

Die Figur 8 zeigt als weitere Ausführungsform ein Transportsystem 1a, welches sich von dem Transportsystem 1 lediglich dadurch unterscheidet, dass zusätzlich zu der Transportstrecke 3 eine weitere Transportstrecke 3a vorgesehen ist. Diese ist insbesondere auch hinsichtlich ihrer Transporträder 10a bezogen auf eine parallel zu den Transportstreckenabschnitten 3.1 und senkrecht zur Ebene der Transportstrecken 3 und 3a orientierte Symmetrieebene E spiegelsymmetrisch zur Transportstrecke 3 ausgebildet. Bei dem Transportsystem 1a sind die Schlitten- oder Schubketten 6 und 7 sowie die Transportsterne 10 und 10a synchron so angetrieben, sodass sich die Schlitten 2 beider Transportstrecken 3 und 3a an den einander benachbarten Transportstreckenabschnitten 3.1 gegensinnig und mit derselben Geschwindigkeit bewegen und dort jeweils ein Schlitten 2 der Transportstrecke 3 einem Schlitten 2 der Transportstrecke 3a in einer Achsrichtung senkrecht zur Transportrichtung A gegenüberliegt. Wie insbesondere die Figur 9 und 10 zeigen, unterscheiden sich die Transporträder 10a von den Transporträdern 10 im Wesentlichen durch den Verlauf der jeweiligen Steuerkurve 18 und durch die Anordnung der fingerartigen Führungs- und Mitnahmeelemente 15 und 16, sodass auch bei den Transporträdern 10a an jedem Mitnahmebereich 11 bezogen auf die Drehrichtung B der das Weiterschieben des jeweiligen Schlittens 2 über dessen Mitnehmer 12 bewirkende Führungs- und Mitnahmeelement 15 dem Mitnahme- und Führungselement 16 nacheilt.

Die Transportsysteme 1 und 1a sind für unterschiedlichste Anwendungen geeignet, insbesondere auch zum Transportieren und/oder zum Behandeln von mit den Schlitten 2 mitgeführten Behältern. Speziell das Transportsystem 1a eignet sich auch zum Zusammenstellen von Behältern zu Behältergruppen und/oder zum Verdichten von Behältergruppen, wobei die Behälter auf einem nicht dargestellten Behältertransporteur in der Transportrichtung A zwischen den Transportstreckenabschnitten 3.1 bewegt werden und mit an den Schlitten 2 vorgesehenen Funktionselementen zu Behältergruppen zusammengestellt und verdichtet werden, sodass in jeder Behältergruppe die Behälter dicht gegeneinander anliegen, beispielsweise für die Herstellung diese Behältergruppen aufweisenden Gebinden.

Die Erfindung wurde voranstehend an Ausführungsbeispielen beschrieben. Es versteht sich, dass zahlreiche Änderungen sowie Abwandlungen möglich sind, ohne den durch die angehängten Ansprüche beschränkten Schutzumfang zu verlassen.

### Bezugszeichenliste

- 1, 1a: Transportsystem
- 2: Schlitten
- 3, 3a: Transportstrecke
- 3.1-3.4: Transportstreckenabschnitt
- 4: Führungsrolle
- 5: Führungsschiene
- 6, 7: Schlitten- oder Schubkette
- 8: Schubglied
- 9: Mitnehmer
- 10, 10a: Transportrad
- 11: Mitnahmebereich
- 12: Mitnehmer
- 13: Sternrad
- 14: Ausnehmung
- 15, 16: Führungs- und Mitnahmeelement
- 15.1, 16.1: Schwenkachse
- 17: Verzahnung
- 18, 18a: Steuerkurve
- 19: Bolzen
- 20: Verstellelement
- 21.1, 21.2: Winkelposition des Steuerpunkt/-abschnitts

- A: Transportrichtung
- B: Drehrichtung des Transportrades 10 bzw. 10a
- E: Symmetrieebene

## Patentansprüche

1. Transportsystem mit wenigstens einer in sich geschlossenen Transportstrecke (3) auf der Schlitten (2) auf einer geschlossenen, Umlenkungen aufweisenden Bewegungsbahn bewegbar sind, die an wenigstens einer Umlenkung ein Transportrad (10, 10a) aufweist, welches an seinem Umfang mehrere Mitnahmebereiche (11) aufweist, in die zum Weiterbewegen der Schlitten an diesen vorgesehene Mitnehmer (12) eingreifen, wobei das Transportsystem wenigstens einen an einer Führung (5) der Transportstrecke (3, 3a) geführten Schlitten (2) umfasst, und wobei das Transportrad (10, 10a) an seinem Umfang eine Vielzahl von ersten Führungs- und Mitnahmeelementen (15) aufweist, die zum Weiterbewegen der Schlitten (2) mit dem Transportrad (10, 10a) jeweils eine mit Mitnehmern (12) der Schlitten (2) zusammenwirkende Mitnehmerfläche bilden, **dadurch gekennzeichnet, dass** die ersten Führungs- und Mitnehmerelemente (15) jeweils mit ihren Mitnehmerflächen individuell gesteuert in Drehrichtung (B) des Transportrades (10, 10a) und entgegen dieser Drehrichtung bewegbar relativ zum Transportrad (10, 10a) sind.

2. Transportsystem nach Anspruch 1, **dadurch gekennzeichnet, dass** das Transportrad (10, 10a) **dadurch gekennzeichnet ist, dass** die ersten Führungs- und Mitnehmerelemente (15) jeweils um eine Achse (15.1) parallel zur Transportradachse (TA) schwenkbar sind.

3. Transportsystem nach Anspruch 1 oder 2, **dadurch gekennzeichnet, dass** das Transportrad (10, 10a) **dadurch gekennzeichnet ist, dass** jedem ersten Führungs- und Mitnehmerelement (15) ein zweites Mitnehmer- und Führungselement (16) zugeordnet ist, und dass jedes zweite Führungs- und Mitnehmerelement (16) synchron mit dem zugehörigen ersten Führungs- und Mitnehmerelement (15) aber gegenläufig zu diesen bewegbar oder schwenkbar ist.

4. Transportsystem nach einem der vorhergehenden Ansprüche, **dadurch gekennzeichnet, dass** das Transportrad (10, 10a) **dadurch gekennzeichnet ist, dass** bezogen auf die Drehrichtung (B) des Transportrades (10, 10a) die ersten Führungs- und Mitnehmerelemente (15) den ihnen zugeordneten zweiten Führungs- und Mitnehmerelementen (16) nacheilen.

5. Transportsystem nach einem der vorhergehenden Ansprüche, **dadurch gekennzeichnet, dass** das Transportrad (10, 10a) **dadurch gekennzeichnet ist, dass** das jeweils erste und das zugehörige zweite Führungs- und Mitnahmeelement (15, 16) antriebsmäßig, vorzugsweise über eine Verzahnung (17) miteinander verbunden sind.

6. Transportsystem nach einem der vorhergehenden Ansprüche, **dadurch gekennzeichnet, dass** das Transportrad (10, 10a) **dadurch gekennzeichnet ist, dass** der Steuerpunkt, an dem das Bewegen zumindest der ersten Führungs- und Mitnahmeelemente (15) relativ zum Transportrad (10, 10a) in Abhängigkeit von dessen Drehstellung erfolgt, einstellbar ist.

7. Transportsystem nach Anspruch 6, **dadurch gekennzeichnet, dass** das Transportrad (10, 10a) **dadurch gekennzeichnet ist, dass** zum Einstellen des Steuerpunktes eine verstellbare Steuerkurve (18, 18a) vorgesehen ist.

8. Transportsystem nach einem der vorhergehenden Ansprüche, **gekennzeichnet durch** das Transportrad (10, 10a), das **dadurch** gekennzeichnet ist, dass wenigstens ein Sternrad (13) welches an seinem Umfang eine Vielzahl von umfangsseitig offenen Ausnehmungen (14) aufweist, wobei an dem wenigstens einen Sternrad (13) die Führungs- und Mitnahmeelemente (15, 16) beweglich, vorzugsweise schwenkbar vorgesehen und mit fingerartig ausgeführten und die Mitnahmeflächen bildenden Abschnitten im Bereich der Ausnehmungen (14) angeordnet sind.

9. Transportsystem nach einem der vorhergehenden Ansprüche, **dadurch gekennzeichnet dass** die Transportstrecke (3, 3a) in einer Transportrichtung (A) dem Transportrad (10, 10a) vorrausgehend einen Transportstreckenabschnitt (3.1, 3.2) bildet, auf dem die Schlitten (2) durch ein Vorschubelement, beispielsweise in Form einer Schlitten - oder Schubkette (6, 7) bewegt werden, und dass die ersten Führungs- und Mitnehmerelemente (15) des Transportrades so gesteuert sind, dass über diese Elemente nach dem Einlaufen eines Mitnehmers (12) eines Schlittens (2) in einen Mitnahmebereich (11) des Transportrades (10, 10a) durch Bewegen der Mitnahmefläche des jeweiligen Führungs- und Mitnahmeelementes (15) in Drehrichtung (B) des Transportrades (10, 10a) und relativ zu diesem eine Beschleunigung des Schlittens (2) erfolg.

10. Transportsystem nach einem der vorhergehenden Ansprüche, **dadurch gekennzeichnet, dass** es wenigstens zwei Transporträder (10, 10a) an jeweils eine Umlenkung bildenden Transportstreckenabschnitten (3.3, 3.4) der Transportstrecke (3, 3a) sowie dazwischenliegend geradlinige oder im Wesentlichen geradlinige Transportstreckenabschnitte (3.1, 3.2) aufweist.

11. Transportsystem nach einem der vorhergehenden Ansprüche, **dadurch gekennzeichnet, dass** es zwei Transportstrecken (3, 3a) aufweist, die spiegelsymmetrisch zu einer senkrecht zur Ebene der Transportstrecken (3, 3a) orientierte Ebene (E) ausgebildet sind.

12. Transportsystem nach einem der vorhergehenden Ansprüche, **dadurch gekennzeichnet, dass** es Bestandteil einer Vorrichtung oder Anlage zum Behandeln von Behältern und/oder Behältergruppen ist.

## Claims

1. Conveying system having at least one closed conveying segment (3) on which carriages (2) can be moved on a closed movement path comprising deflections which, at at least one deflection, comprises a conveying wheel (10, 10a), which comprises at its circumference a plurality of catch regions (11), into which catch elements (12) engage for the further movement of the carriages, wherein the conveying system comprises at least one carriage (2) guided on a guide (5) of the conveying segment (3, 3a), and wherein the conveying wheel (10, 10a) comprises at its circumference a plurality of first guiding and entraining elements (15), which, for the further movement of the carriages (2) with the conveying wheel (10, 10a), form in each case a catch surface which interacts with catch elements (12) of the carriages (2), **characterised in that** the first guiding and entraining elements (15) can in each case be moved, individually controlled by their catch surfaces, in the direction of rotation (B) of the conveying wheel (10, 10a) and against this direction of rotation relative to the conveying wheel (10, 10a).

2. Conveying system according to claim 1, **characterised in that** the conveying wheel (10, 10a) is **characterized in that** the first guiding and entraining elements (15) can in each case be pivoted about an axis (15.1) parallel to the conveying axis (TA).

3. Conveying system according to claim 1 or 2, **characterised in that** the conveying wheel (10, 10a) is **characterised in that** a second entraining and guiding element (16) is allocated to each first guiding and entraining element (15), and that each second guiding and entraining element (16) can be moved or pivoted in synchrony with the guiding and entraining element (15) pertaining to it, but in the opposite direction to it.

4. Conveying system according to any one of the preceding claims, **characterised in that** the conveying wheel (10, 10a) is **characterised in that**, relative to the direction of rotation (B) of the conveying wheel (10, 10a), the first guiding and entraining elements (15) lag behind the second guiding and entraining elements (16) allocated to them.

5. Conveying system according to any one of the preceding claims, **characterised in that** the conveying wheel (10, 10a) is **characterised in that** the respective first and the second allocated guiding and entraining element (15, 16) are connected to one another in drive fashion, preferably by means of a tooth arrangement (17).

6. Conveying system according to any one of the preceding claims, **characterised in that** the conveying wheel (10, 10a) is **characterised in that** the control point at which the movement at least of the first guiding and entraining elements (15) takes place can be adjusted relative to the conveying wheel (10, 10a) as a function of its rotational setting.

7. Conveying system according to claim 6, **characterised in that** the conveying wheel (10, 10a) is **characterised in that**, in order to adjust the control point, an adjustable control curve (18, 18a) is provided.

8. Conveying system according to any one of the preceding claims, **characterised in that** the conveying wheel (10, 10a) is **characterised by** at least one star wheel (13) comprising at its circumference a plurality of cut-out openings (14), open on the circumference side, wherein the guiding and entraining elements (15, 16) are provided at the at least one star wheel (13) such as to move, preferably such as to pivot, and are arranged with sections configured as fingers and forming the catch surfaces in the region of the cut-out openings (14).

9. Conveying system according to any one of the preceding claims, **characterised in that** the conveying segment (3, 3a) forms, in a conveying direction (A) preceding the conveying wheel (10, 10a), a conveying segment section (3.1, 3.2), on which the carriage (2) is moved by a thrust element, for example in the form of a carriage chain or thrust chain (6, 7), and that the first guiding and entraining elements (15) of the conveying wheel are controlled in such a way that, by means of these elements, after a catch element (12) of a carriage (2) has entered a catch region (11) of the conveying wheel (10, 10a), by way of the movement of the catch surface of the respective guiding and entraining element (15) in the direction of rotation (B) of the conveying wheel (10, 10a) and relative thereto, an acceleration of the carriage (2) takes place.

10. Conveying system according to any one of the preceding claims, **characterised in that** it comprises at least two conveying wheels (10, 10a) on conveying segment sections (3.3, 3.4) of the conveying segment (3, 3a) forming in each case a deflection, and in between comprises conveying segment sections (3.1, 3.2) in a straight line or essentially in a straight line.

11. Conveying system according to any one of the preceding claims, **characterised in that** it comprises two conveying segments (3, 3a), which are configured mirror-symmetrically to a plane (E) which is oriented perpendicular to the plane of the conveying segments (3, 3a).

12. Conveying system according to any one of the preceding claims, **characterised in that** it is a constituent part of a device or system for the treatment of containers and/or container groups.

## Revendications

1. Système de transport avec au moins une trajectoire de transport (3) fermée en soi sur le chariot (2) sur une bande de déplacement fermée, présentant des renvois, qui présente sur au moins un renvoi une roue de transport (10, 10a) qui présente plusieurs zones d'entraînement (11) sur sa périphérie, dans lesquelles s'engagent des éléments d'entraînement (12) prévus pour la suite du déplacement des chariots sur celui-ci, dans lequel le système de transport comporte au moins un chariot (2) guidé sur un guidage (5) de la trajectoire de transport (3, 3a), et dans lequel la roue de transport (10, 10a) présente sur sa périphérie une pluralité de premiers éléments de guidage et d'entraînement (15) qui forment pour la suite du déplacement des chariots (2) avec la roue de transport (10, 10a) respectivement une surface d'entraînement coagissant avec des éléments d'entraînement (12) des chariots (2), **caractérisé en ce que** les premiers éléments de guidage et d'entraînement (15) sont commandés individuellement respectivement avec leurs surfaces d'entraînement dans le sens de rotation (B) de la roue de transport (10, 10a) et sont mobiles dans le sens inverse à ce sens de rotation par rapport à la roue de transport (10, 10a).

2. Système de transport selon la revendication 1, **caractérisé en ce que** la roue de transport (10, 10a) est caractérisée du fait que les premiers éléments de guidage et d'entraînement (15) sont pivotants respectivement autour d'un axe (15.1) parallèlement à l'axe de roue de transport (TA).

3. Système de transport selon la revendication 1 ou 2, **caractérisé en ce que** la roue de transport (10, 10a) est caractérisée du fait qu'à chaque premier élément de guidage et d'entraînement (15) est associé un second élément d'entraînement et de guidage (16), et **en ce que** chaque second élément de guidage et d'entraînement (16) est mobile ou pivotant de manière synchrone avec le premier élément de guidage et d'entraînement afférent (15) mais dans le sens inverse à ceux-ci.

4. Système de transport selon l'une des revendications précédentes, **caractérisé en ce que** la roue de transport (10, 10a) est caractérisée du fait que les premiers éléments de guidage et d'entraînement (15) sont en arrière des seconds éléments de guidage et d'entraînement (16) qui leur sont associés par rapport au sens de rotation (B) de la roue de transport (10, 10a).

5. Système de transport selon l'une des revendications précédentes, **caractérisé en ce que** la roue de transport (10, 10a) est caractérisée du fait que le premier respectif et le second élément de guidage et d'entraînement (15, 16) afférent sont reliés en entraînement, de préférence par une denture (17) entre eux.

6. Système de transport selon l'une des revendications précédentes, **caractérisé en ce que** la roue de transport (10, 10a) est caractérisée du fait que le point de commande, sur lequel peut être réglé le déplacement au moins des premiers éléments de guidage et d'entraînement (15) par rapport à la roue de transport (10, 10a) est effectué en fonction de sa position de rotation.

7. Système de transport selon la revendication 6, **caractérisé en ce que** la roue de transport (10, 10a) est caractérisée du fait qu'une courbe de commande (18, 18a) réglable est prévue pour le réglage du point de commande.

8. Système de transport selon l'une des revendications précédentes, **caractérisé par** la roue de transport (10, 10a) qui est caractérisée du fait qu'au moins une roue d'étoile (13) qui présente sur sa périphérie une pluralité d'évidements (14) ouverts côté périphérie, dans lequel les éléments de guidage et d'entraînement (15, 16) sont prévus de manière mobile, de préférence pivotante sur l'au moins une roue d'étoile (13) et sont agencés avec des sections formant les surfaces d'entraînement et réalisées comme des doigts dans la zone des évidements (14).

9. Système de transport selon l'une des revendications précédentes, **caractérisé en ce que** la trajectoire de transport (3, 3a) forme, dans un sens de transport (A) précédant la roue de transport (10, 10a), une section de trajectoire de transport (3.1, 3.2), sur laquelle les chariots (2) sont déplacés par un élément d'avance, par exemple sous la forme d'une chaîne de chariot ou de poussée (6, 7), et **en ce que** les premiers éléments de guidage et d'entraînement (15) de la roue de transport sont commandés de sorte qu'une accélération du chariot (2) soit effectuée par ces éléments après l'entrée d'un entraînement (12) d'un chariot (2) dans une zone d'entraînement (11) de la roue de transport (10, 10a) par déplacement de la surface d'entraînement de l'élément de guidage et d'entraînement (15) respectif dans le sens de rotation (B) de la roue de transport (10, 10a) et par rapport à celui-ci.

10. Système de transport selon l'une des revendications précédentes, **caractérisé en ce qu'**il présente au moins deux roues de transport (10, 10a) sur des sections de trajectoire de transport (3.3, 3.4) formant respectivement un renvoi de la trajectoire de transport (3, 3a) ainsi que des sections de trajectoire de transport (3.1, 3.2) sensiblement en ligne droite ou en ligne droite entre elles.

11. Système de transport selon l'une des revendications précédentes, **caractérisé en ce qu'**il présente deux trajectoires de transport (3, 3a) qui sont réalisées de manière symétrique à un plan (E) orienté perpendiculairement au plan des trajectoires de transport (3, 3a).

12. Système de transport selon l'une des revendications précédentes, **caractérisé en ce qu'**il est un constituant d'un dispositif ou d'une installation pour le traitement de récipients et/ou de groupes de récipient.
